# EUROPÄISCHE PATENTSCHRIFT

(11) **EP 2 209 174 B1**
(45) Veröffentlichungstag und Bekanntmachung des Hinweises auf die Patenterteilung: **06.08.2014**
(21) Anmeldenummer: 09016020.1
(22) Anmeldetag: 24.12.2009
(51) Int. Cl.: H02B 1/052

(54) **Gerät mit einer Befestigungsvorrichtung zur lösbaren Verrastung an einer Tragschiene**
Device with a fastening device for releasable attachment to a support rail
Appareil avec un dispositif de fixation amovible à un rail de support

(30) Priorität: 15.01.2009 DE 102009005050
(43) Veröffentlichungstag der Anmeldung: 21.07.2010
(73) Patentinhaber: Bartec GmbH, 97980 Bad Mergentheim (DE)
(72) Erfinder: Lux, Karl-Heinz, 97990 Weikersheim (DE)

(56) Entgegenhaltungen:
- WO-A1-2005/041374
- DE-B3- 10 243 383
- US-A1- 2003 143 896

## Beschreibung

### Gerät

Die Erfindung betrifft ein Gerät mit einer Befestigungsvorrichtung zur lösbaren Verrastung an einer Tragschiene.

Ein derartiges Gerät ist aus der US2003/0143896 bekannt.

Die Aufgabe der Erfindung besteht darin, ein Gerät der eingangs beschriebenen Art dahingehend weiterzubilden, dass mit einfachen Mitteln eine gegen Vibrationen, Schwingungen und Fehlbedienungen zuverlässige und zudem schnell und unkompliziert entriegelbare Sicherung der Verrastung erzielt wird.

Diese Aufgabe wird erfindungsgemäß durch die Merkmale des Anspruchs 1 gelöst.

Bevorzugte Ausgestaltungen und Weiterbildungen der Erfindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

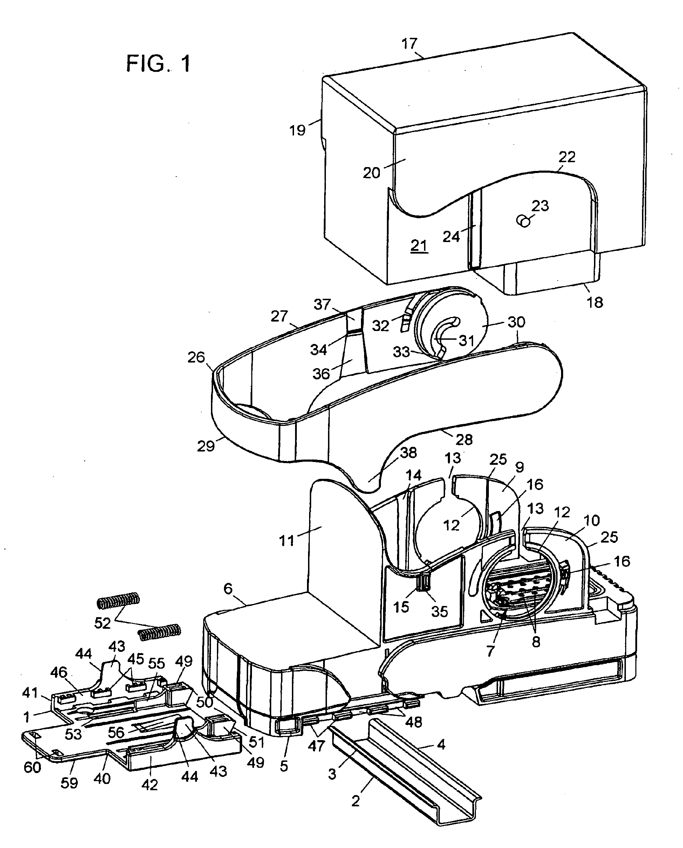

- FIG. 1: ein erfindungsgemäßes Gerät in einer Sprengdarstellung,
- FIG. 2: das Gerät der FIG. 1 in einer Montageposition mit entriegelter Verrastsicherung,
- FIG. 3: das Gerät der FIG. 2 in verriegelter Endmontageposition,
- FIG. 4: das Gerät der FIG. 3 in einer Seitenansicht, teilweise geschnitten.
- FIG. 5: einen Teil des Geräts der FIG. 4 gemäß dem Ausschnitt A in einer vergrößerten Darstellung, teilweise geschnitten,
- FIG. 6: das Gerät der FIG. 4 mit einer anderen Teilschnittansicht,
- FIG. 7: einen Teil des Geräts der FIG. 6 gemäß dem Ausschnitt B in einer vergrößerten Darstellung, teilweise geschnitten,
- FIG. 8: das Gerät der FIG. 4 und 6 mit einer nochmals anderen Teilschnittansicht,
- FIG. 9: einen Teil des Geräts der FIG. 8 gemäß dem Ausschnitt C in einer vergrößerten Darstellung, teilweise geschnitten,

Das in der Zeichnung dargestellte erfindungsgemäße Gerät kann als elektrotechnische Steuer- und Regeleinheit ausgeführt sein und für den Einsatz in durch Staub, Schmutz, Feuchtigkeit, Spritzwasser und zündfähige Atmosphäre gefährdeten Bereichen vorgesehen sein. Das Gerät wird mittels einer Befestigungsvorrichtung 1 an einer Tragschiene 2 lösbar verrastet. Die Tragschiene 2 kann als so genannte Hutschiene im Querschnitt etwa U-förmig sein und an den zwei parallelen Seitenwandungen je einen Querschenkel 3, 4 aufweisen, die sich in einander entgegengesetzte Richtungen erstrecken.

Die Befestigungsvorrichtung 1 ist an einer Bodenplatte 5 eines Gehäuses 6 befestigt und quer zur Längsrichtung der Tragschiene 2 verschiebbar gelagert. An derjenigen Seite der Tragschiene 2, die der Befestigungsvorrichtung 1 gegenüberliegt, weist das Gehäuse 6 eine Steckeraufnahme 7 auf, die mehrere zueinander beabstandete elektrische Kontaktbuchsen 8 besitzt, denen für die Kontaktierung elektrischer Zu- und Ableitungen hier nicht dargestellte Elektroanschlüsse zugehörig sind.

Das Gehäuse 6 besitzt zwei in einem Abstand zueinander parallele Stützwände 9, 10, die mittels einer quer dazu angeordneten Stirnwand 11 verbunden sind, so dass ein dreiseitig begrenzter Aufnahmeraum gebildet ist. In jeder der beiden Stützwände 9, 10 befindet sich je eine kreisförmige Lageraufnahme 12, die einander gegenüberliegen. Der Lageraufnahme 12 ist eine Eintrittsöffnung 13 zugehörig, die in der Stützwand 9, 10 als schlitzförmige Ausnehmung ausgebildet ist.

Weiterhin besitzen die Stützwände 9, 10 an ihren Innenseiten einander gegenüberliegend je eine Längsnut 14 und an ihren Außenseiten gegenüberliegend je einen Rastnocken 15. Und schließlich weisen die Stützwände 9, 10 je einen Sperrteil 16 auf, der neben dem Umfangsbereich der Lageraufnahme 12 angeordnet ist.

Zwischen die Stützwände 9, 10 des Gehäuses 6 ist ein im Wesentlichen als Rechteckkörper ausgebildetes Modulteil 17 einsetzbar, das an der dem Gehäuse 6 zugewandten Unterseite einen Stecker 18 aufweist, der von einer aus vier rechtwinklig zueinander angeordneten Wandteilen gebildeten Umfangswand begrenzt ist. Die Umfangswand umgibt mehrere elektrische Kontaktstifte, die auf Abstand zueinander angeordnet und mit elektrischen oder elektronischen Einbauteilen leitend verbunden sind, die sich innerhalb des Modulteils 17 befinden. Die Kontaktstifte des Steckers 18 sind in die Kontaktbuchsen 8 der Steckeraufnahme 7 einsteckbar.

An beabstandeten parallelen Seitenwänden 19, 20 des Modulteils 17 sind Wandteile 21 etwas nach innen zurückgesetzt und durch eine etwa wellenförmige Randkontur 22 begrenzt. An den Wandteilen 21 ist je ein Verriegelungszapfen 23 angeordnet, die einander gegenüberliegen und in entgegengesetzten Richtungen und nach außen hin vorstehen. Außerdem befindet sich an den Außenseiten der Wandteile 21 gegenüberliegend je ein Steg 24, die in die Längsnuten 14 der Stützwände 9, 10 eingreifen. Entsprechend dieser Randkontur 22 weisen die Außenränder der Stützwände 9, 10 eine ebenfalls etwa wellenförmige Stirnseitenkontur 25 auf, die in der Endmontagestellung mit der Randkontur 22 korrespondiert. Die Tiefe der zurückgesetzten Wandteile 21 entspricht etwa der Dicke der Stützwände 9, 10, die an den Wandteilen 21 anliegen.

Außerdem ist ein Sicherungshebel 26 vorgesehen, der zwei einander beabstandete parallele Schenkel 27, 28 und einen Griffteil 29 aufweist, der etwas gebogen sein kann und die Schenkel 27, 28 verbindet, so dass der Sicherungshebel 26 im Wesentlichen als U-förmiger Bügel ausgebildet ist. Der Sicherungshebel 26 ist an den Stützwänden 9, 10 des Gehäuses 6 angeordnet und schwenkbar gelagert. Dazu ist an den Innenseiten der Schenkel 27, 28 an deren freien Enden je ein Lagerteil 30 angeordnet, die einander spiegelsymmetrisch gegenüberliegen und je eine Führungsnut 31 aufweisen. Die Lagerteile 30 sind als kreisringförmige Scheiben ausgebildet und formschlüssig in den Lageraufnahmen 12 der Stützwände 9, 10 gelagert, wobei die Mittenachsen der kreisringförmigen Lagerteile 30 die Schwenkachse des Sicherungshebels 26 bilden.

Neben dem Umfangsbereich der Lagerteile 30 ist an den Schenkeln 27, 28 des Sicherungshebels 26 je eine Sperrteilaufnahme 32 ausgebildet, in welche die Sperrteile 16 der Stützwände 9, 10 formschlüssig eingreifen, und zwar so, dass der Sicherungshebel 26 sowohl in seinen Endstellungen als auch während des Verschwenkens unlösbar gehalten ist und nicht entfernt werden kann.

Die Führungsnuten 31 befinden sich etwa radial in dem Lagerteil 30 und verlaufen von einer am Umfangsrand der Lagerteile 30 ausgebildeten Einführöffnung 33 ungefähr halbkreisförmig in Richtung zur Mittenachse des Lagerteils 30. Die Breite der Führungsnuten 31 ist so bemessen, dass sie etwa gleich oder nur geringfügig größer ist als der Durchmesser der Verriegelungszapfen 23, so dass letztere in den Führungsnuten 31 weitgehend spielfrei geführt sind.

An den Innenseiten der beiden Schenkel 27, 28 des Sicherungshebels 26 sind zwei einander spiegelbildlich gegenüberliegende Widerlager 34 ausgebildet, die an einem Anschlag 35 der Rastnocken 15 anliegen. Den Widerlagern 34 ist für den Rastnocken 15 eine Auflaufschräge 36 vorgeordnet und eine Vertiefung 37 nachgeordnet. Weiterhin weist der Sicherungshebel 26 an seinen Schenkeln 27, 28 nasenförmige Vorsprünge 38 auf, die an ihren Innenseiten einander spiegelbildlich gegenüberliegende Verriegelungskanten 39 besitzen.

Die Befestigungsvorrichtung 1 ist im Wesentlichen U-förmig gestaltet und weist eine Grundplatte 40 mit zwei materialeinheitlich angeformten Seitenwandungen 41, 42 auf, die zueinander beabstandet sind und sich von der Ebene der Grundplatte 40 rechtwinklig nach oben erstrecken. Etwa in der Längsmitte der Seitenwandungen 41, 42 ist je ein sich nach oben hin erstreckender rechteckförmiger Wandungsteil 43 materialeinheitlich angeformt, an dem eine Sperrkante 44 ausgebildet ist.

An den einander zugewandten Innenseiten der Seitenwandungen 41, 42 sind mehrere Haltestege 45 in einer Reihe hintereinander parallel zur Grundplatte 40 so angeordnet, dass Lücken 46 zwischen den Haltestegen 45 bestehen. Wenn die Befestigungsvorrichtung 1 an der Bodenplatte 5 des Gehäuses 6 montiert ist, korrespondieren die Haltestege 45 mit Halterippen 47, die an einander gegenüberliegenden Seiten der Bodenplatte 5 ebenfalls in einer Reihe hintereinander angeordnet sind. Zwischen den einzelnen Halterippen 47 bestehen Abstände 48, in welche die Haltestege 45 der Befestigungsvorrichtung 1 eingreifen, wobei sich die Halterippen 47 in den Lücken 46 befinden.

An einem zwischen den Seitenwandungen 41, 42 quer verlaufenden Randbereich der Grundplatte 40 können zwei auf Abstand zueinander angeordnete Raststücke 49 ausgebildet sein, die mit der Grundplatte 40 zweckmäßig materialeinheitlich ausgeführt und für die Verrastung mit der Tragschiene 2 vorgesehen sind. Dafür können die Raststücke 49 je eine Aussparung 50 aufweisen, in die bei der Verrastung mit der Tragschiene 2 deren einer Querschenkel 3 eingreift. Um die Montage für die Verrastung zu erleichtern, kann es vorteilhaft sein, an der der Tragschiene 2 zugewandten Seite der Raststücke 49 eine Gleitschräge 51 vorzusehen, die in Richtung zur Aussparung 50 hin ansteigt und an der die Außenkante des Querschenkels 3 während des Verrastungsvorgangs entlanggleitet.

Außerdem sind zwei Federn 52 vorgesehen, die vorzugsweise als schraubenförmige Druckfedern ausgebildet sind. Die Federn 52 können in Längsrichtung quer zur Tragschiene 2 ausgerichtet und an der Grundplatte 40 der Befestigungsvorrichtung 1 bevorzugt in je einer Längsmulde 53 gelagert sein. Zwischen den beiden Federn 52 bzw. den Längsmulden 53 besteht ein Abstand, der etwa gleich dem Abstand zwischen den beiden Raststücken 49 ist. Die Federn 52 drücken die an der Bodenplatte 5 gleitend gelagerte Befestigungsvorrichtung 1 in Richtung gegen die Tragschiene 2. Dafür liegt das eine Ende der Federn 52 an einer Wandfläche 54 der Bodenplatte 5 an. Das andere Ende der Federn 52 stützt sich an je einer Rippe 55 der Grundplatte 40 ab. Die Rippen 55 sind zwischen der der Gleitschräge 51 gegenüberliegenden Rückseite der Raststücke 40 und dem einen Ende der Längsmulden 53 angeordnet und mit der Grundplatte 40 und den Raststücken 49 materialeinheitlich ausgebildet.

In dem Abstandsbereich zwischen den beiden Raststücken 49, etwa in der Mitte der Grundplatte 40, ist an letzterer eine bevorzugt materialeinheitlich angeformte Rastzunge 56 angeordnet. Die rechteckförmige Rastzunge 56 ist zweckmäßig so ausgebildet, dass ihre eine Schmalseite an der Grundplatte 40 angeformt ist. Die Rastzunge 56 selbst erstreckt sich von dieser Schmalseitenanformung aus schräg nach oben über die Ebene der Grundplatte 40 hinaus, so dass sie einem von oben angreifenden Druck federnd entgegenwirkt. Bei montierter Befestigungsvorrichtung 1 ist die Rastzunge 56 mit der Bodenplatte 5 verrastet, wobei eine der Schmalseitenanformung entfernt liegende freie Stirnfläche 57 der Rastzunge 56 mit einer Wand 58 der Bodenplatte 5 korrespondiert.

An der den Raststücken 49 gegenüberliegenden Seite weist die Grundplatte 40 der Befestigungsvorrichtung 1 eine in ihrer Ebene vorstehende Zunge 59 auf, die zwei als Löcher ausgebildete Angriffteile 60 aufweist, an die ein Hilfswerkzeug angesetzt werden kann. Wenn das Gehäuse 6 von der Tragschiene 2 entfernt werden soll, kann damit die Befestigungsvorrichtung 1 gegen die Kraft der Federn 52 verschoben werden, so dass sich die Raststücke 52 von der Tragschiene 2 entfernen und deren Querschenkel 3 freigeben.

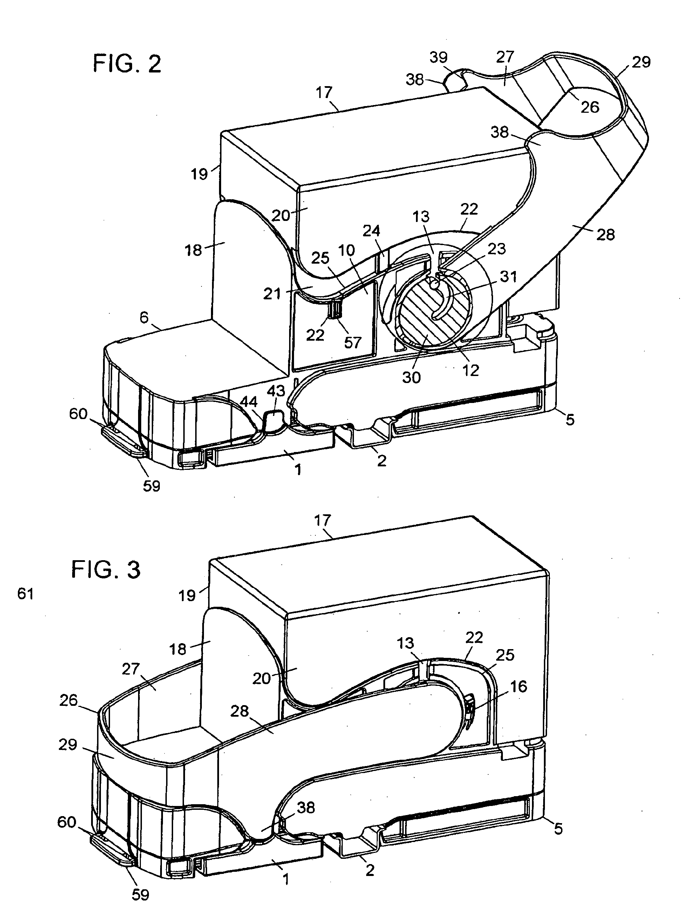

Wenn das Modulteil 17 in das Gehäuse 6 eingesetzt werden soll, wird zunächst der Sicherungshebel 26, wie in FIG. 2 dargestellt, im Uhrzeigersinn ganz nach hinten in eine begrenzte Öffnungsstellung geschwenkt. Dabei sind die Eintrittsöffnungen 13 der Stützwände 9, 10 und die Einführöffnungen 33 der Lagerteile 30 deckungsgleich. Das Modulteil 17 wird in den von den Stützwänden 9, 10 und der Stirnwand 11 dreiseitig begrenzten Aufnahmeraum des Gehäuses 6 so eingesetzt, dass die Stege 24 in die Längsnuten 14 eingreifen und die Verriegelungszapfen 23 durch die Einführöffnungen 33 an den Anfang der Führungsnuten 31 gelangen.

Ein weiteres Hinunterdrücken des Modulteils 17 in Richtung gegen das Gehäuse 6 ist nunmehr nicht mehr möglich. Das Modulteil 17 kann jetzt nur noch durch Verschwenken des Sicherungshebels 26 im Gegenuhrzeigersinn weiter in Richtung gegen das Gehäuse 6 verlagert werden, wobei die Verriegelungszapfen 23 innerhalb der Führungsnuten 31 zwangsgeführt sind. Sobald der Sicherungshebel 26 etwas im Gegenuhrzeigersinn verschwenkt wird, werden die Verriegelungszapfen 23 innerhalb der Führungsnuten 31 oben übergriffen.

In dieser Position befindet sich der Stecker 18 des Modulteils 17 bereits innerhalb der Steckeraufnahme 7 des Gehäuses 6. Die Kontaktstifte des Steckers 18 korrespondieren dabei noch nicht mit den Kontaktbuchsen der Steckeraufnahme 7. Zwischen den freien Enden der Kontaktstifte und den Buchsenöffnungen der Kontaktbuchsen besteht ein axialer Mindestkontaktabstand, der den Vorschriften der DIN EN 50018 und DIN EN 60079 entspricht. Da das Modulteil 17 in dieser Position durch den formschlüssigen Übergriff der Verriegelungszapfen 23 bereits gesichert ist, kann es beispielsweise durch einen explosionsartigen Gegendruck innerhalb der Steckverbindung nicht mehr von dem Gehäuse 6 weg in Richtung nach oben gedrückt werden.

In der FIG. 3 ist die Endmontagestellung dargestellt, in welcher der Stecker 18 des Modulteils 17 ganz in die Steckeraufnahme 7 des Gehäuses 6 eingeschoben ist und die Kontaktstifte sich innerhalb der Kontaktbuchsen befinden. Der Sicherungshebel 26 ist im Gegenuhrzeigersinn in seine horizontale Verschlussstellung verschwenkt worden. Während des Verschwenkens glitten die Auflaufschrägen 36 des Sicherungshebels 26 kurz vor Erreichen der Verschlussstellung über die Rastnocken 15 der Stützwände 9,10, bis dann am Ende der Schwenkbewegung die Rastnocken 15 in die Vertiefungen 37 des Sicherungshebels 26 einschnappten, so dass die Widerlager 34 an den Anschlägen 35 der Rastnocken 15 anliegen. Dadurch ist ein unbeabsichtigtes Hochschwenken des Sicherungshebels 26 im Uhrzeigersinn mit Sicherheit unterbunden und eine stabile Fixierung der Verschlussstellung gewährleistet.

In der dargestellten Verschlussstellung des Sicherungshebels 26 übergreifen dessen Vorsprünge 38 die Wandungsteile 43 der Befestigungsvorrichtung 1. Dabei liegen die Sperrkanten 44 der Wandungsteile 43 an den Verriegelungskanten 39 der Vorsprünge 38 an und verhindern somit ein horizontales Verschieben der Befestigungsvorrichtung 1. Dadurch ist die Verrastung des Gerätes 6 an der Tragschiene 2 gegen ein unbeabsichtigtes Lösen auch bei auftretenden Schwingungen oder Vibrationen zuverlässig gesichert. Die Befestigungsvorrichtung 1 kann nur dann mittels des Hilfswerkzeugs gegen die Kraft der Federn 52 verschoben werden, wobei sich die Raststücke 49 von der Tragschiene 2 entfernen, wenn zuvor der Sicherungshebel 26 nach Überwindung der Rastnocken 15 im Uhrzeigersinn in Richtung zur Öffnungsstellung verschwenkt wurde.

Auch wenn das Modulteil 17 zum Beispiel im Falle eines Defekts bei laufendem Betrieb ausgetauscht werden soll, ist zunächst der Sicherungshebel 26 in die in FIG. 2 dargestellte Öffnungsstellung zu schwenken, wobei das Modulgehäuse 2 durch die exzentrische Zwangsführung der Verriegelungszapfen 23 von dem Gehäuse 6 in Richtung nach oben verlagert und die Steckverbindung entkuppelt wird. Nach dem Erreichen der Öffnungsstellung des Sicherungshebels 26 kann das Modulteil 17 von Hand in Richtung nach oben aus dem Aufnahmeraum des Gehäuses 6 herausgezogen und ein neues eingeschoben werden.

Das Modulteil 17 kann vorteilhaft auch in explosionsgefährdeter Umgebung während des laufenden Betriebs gefahrlos gewechselt werden, ohne dass die elektrische Anlage abgeschaltet werden muss. Es müssen dazu keine fest verbundenen Anschlüsse gelöst werden. Aufgrund der explosionsgeschützten Ausführung können weder beim Einstecken noch beim Entfernen des Modulteils 17 im Innenbereich der Steckverbindung entstehende Funken nach außen durchschlagen und eine explosive Umgebungsatmosphäre zur Entzündung bringen, so dass insgesamt eine hohe Sicherheit gegeben ist.

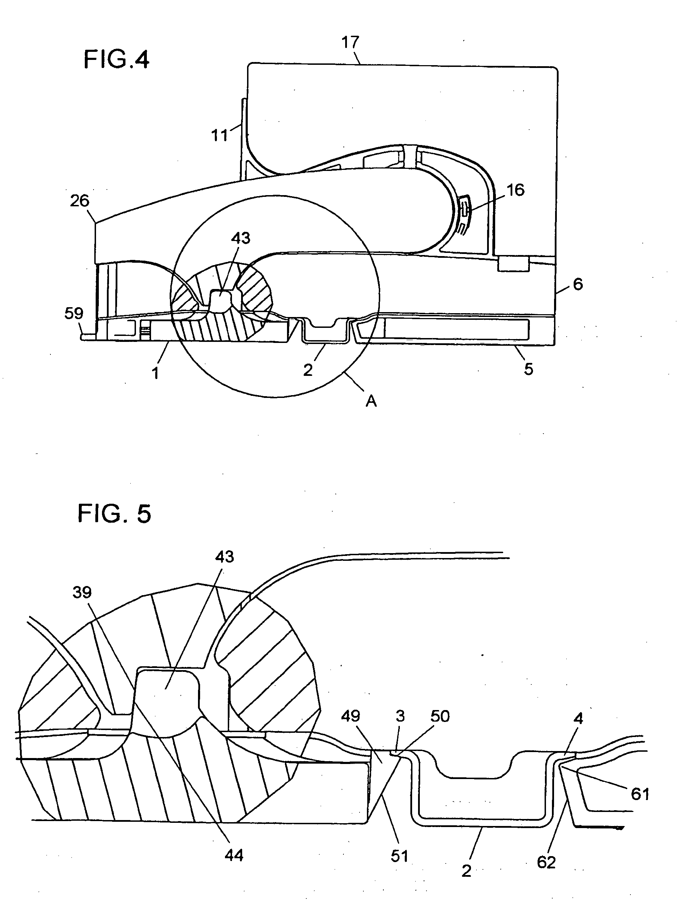

Den FIG. 4 und 5 ist zu entnehmen, dass der in der Zeichnung rechte Querschenkel 4 der Tragschiene 2 von einer Nase 61 der Bodenplatte 5 untergriffen ist. Der Nase 61 ist eine schräge Gleitfläche 62 vorgeordnet. Beim Aufrasten des Gehäuses 6 auf die Tragschiene 2 gleiten die äußeren Kanten der Querschenkel 3, 4 an der Gleitschräge 51 und der Gleitfläche 62 entlang, wobei die Raststücke 49 gegen die Kraft der Federn 52 etwas nach links verschoben werden. Sobald das Gehäuse 6 auf der Tragschiene 2 aufsitzt, wobei die Nase 61 den Querschenkel 4 untergreift, schnappen die Raststücke 49 durch die Kraft der Federn 52 unter den Querschenkel 3, so dass letzterer in die Aussparung 50 eingreift. Dadurch ist das Gehäuse 6 an der Tragschiene 6 angerastet. Durch den in der Verschlussstellung befindlichen Sicherungshebel 26 liegen die Sperrkanten 44 der Wandungsteile 43 an den Verriegelungskanten 39 der Vorsprünge 38 an, so dass die Befestigungsvorrichtung 1 mit den Raststücken 49 nicht von der Tragschiene 2 weg verlagert werden können, wodurch ein absolut sicherer Halt gewährleistet ist.

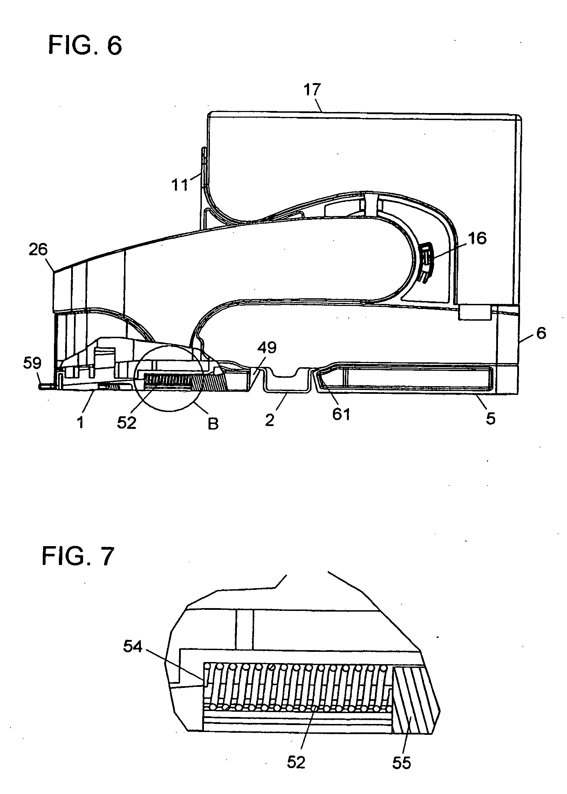

Die FIG. 6 und 7 verdeutlichen insbesondere die Anordnung der Federn 52. Dabei ist zu erkennen, dass das eine linke Ende der Feder an der Wandfläche 54 der Bodenplatte 5 anliegt. Das andere rechte Ende der Feder 52 ist an der Rippe 55 der Grundplatte 40 abgestützt.

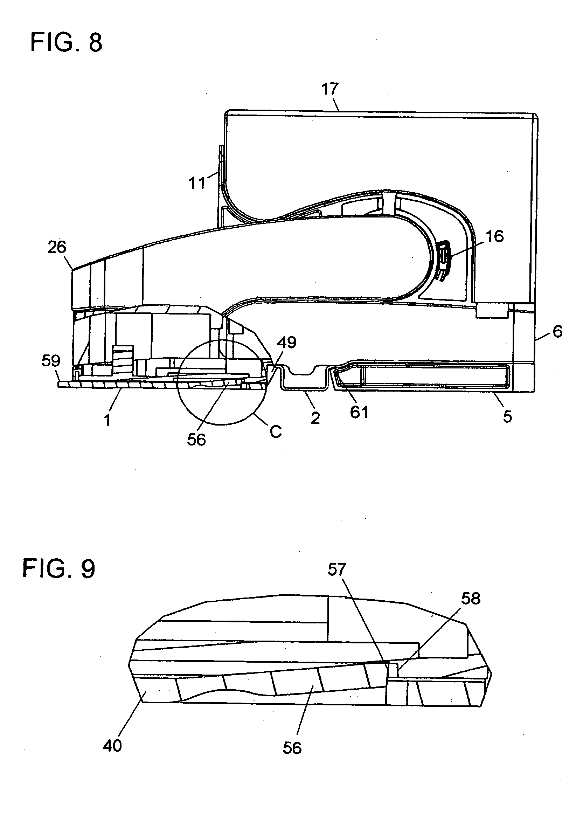

Den FIG. 8 und 9 ist die Positionierung der Befestigungsvorrichtung 1 an der Bodenplatte 5 zu entnehmen. Die mit ihrer linken Schmalseite an der Grundplatte 40 angeformte Rastzunge 56 ragt schräg nach oben in den Bereich der Bodenplatte 5, so dass die freie Stirnfläche 57 der Rastzunge 56 mit der Wand 58 der Bodenplatte 5 korrespondiert.

## Patentansprüche

1. Gerät mit einer Befestigungsvorrichtung (1) zur lösbaren Verrastung an einer Tragschiene (2) und einem die Verrastung in einer Verschlussstellung sichernden Sicherungshebel (26),
**dadurch gekennzeichnet, dass** die Befestigungsvorrichtung (1) an einer Bodenplatte (5) eines Gehäuses (6) vorgesehen und verschiebbar gelagert ist, dass der Sicherungshebel (26) an dem Gehäuse (6) angeordnet ist und mindestens eine Verriegelungskante (39) für eine Sperrkante (44) der Befestigungsvorrichtung (1) aufweist, wobei die Verriegelungskante (39) bevorzugt an einem den vorstehenden Wandteil (43) der Seitenwandung (41, 42) der Befestigungsvorrichtung (1) übergreifenden Vorsprung (38) des Sicherungshebels (26) angeordnet ist.

2. Gerät nach Anspruch 1, **dadurch gekennzeichnet, dass** die Befestigungsvorrichtung (1) an eine Grundplatte (40) aufweist, an der mindestens ein mit der Tragschiene (2) korrespondierendes Raststück (49) angeordnet ist, das eine Aussparung (50) für die Aufnahme eines Querschenkels (3) der Tragschiene (2) aufweist und eine Gleitschräge (51) für die Tragschiene (2) aufweist.

3. Gerät nach Anspruch 2, **dadurch gekennzeichnet, dass** die Befestigungsvorrichtung (1) mindestens einen Haltesteg (45) aufweist, der mit mindestens einer Halterippe (47) der Bodenplatte (5) korrespondiert, in einem zwischen zwei Halterippen (47) der Bodenplatte (5) bestehenden Abstand () angeordnet ist und an einer Seitenwandung (41, 42) der Grundplatte (5) vorgesehen ist.

4. Gerät nach Anspruch 2 oder 3, **dadurch gekennzeichnet, dass** die Befestigungsvorrichtung (1) mindestens eine Sperrkante (44) für den Sicherungshebel (26) aufweist, die an der Seitenwandung (41, 42) der Grundplatte (40) bevorzugt an einem vorstehenden Wandungsteil (43) angeordnet ist.

5. Gerät nach einem der Ansprüche 2 bis 4, **dadurch gekennzeichnet, dass** der Befestigungsvorrichtung (1) mindestens eine das Raststück (49) in Richtung gegen die Tragschiene (2) verlagernde Feder (52) zugeordnet ist, die bevorzugt als schraubenförnige Druckfeder ausgebildet und an der Grundplatte (40) der Befestigungsvorrichtung (1) gelagert ist, mit einem Ende an einer Wandfläche (54) der Bodenplatte (5) des Gehäuses (6) angreift und mit dem anderen Ende bevorzugt an einer Rippe (55) der Grundplatte (40) abgestützt ist.

6. Gerät nach einem der Ansprüche 2 bis 5, **dadurch gekennzeichnet, dass** die Befestigungsvorrichtung (1) mindestens eine mit der Bodenplatte (5) des Gehäuses (6) korrespondierende Rastzunge (56) aufweist, die an der Grundplatte (40) angeordnet ist, deren Ebene in Richtung zur Bodenplatte (5) hin überragt und mit einer Stirnfläche (57) an einer Wand (58) der Bodenplatte (5) anliegt.

7. Gerät nach einem der Ansprüche 2 bis 6, **dadurch gekennzeichnet, dass** die Befestigungsvorrichtung (1) mit der Grundplatte (40) und zwei zueinander beabstandeten Seitenwandungen (41,42) etwa U-förmig ist, dass an den einander zugewandten Innenseiten der Seitenwandungen (41, 42) je mindestens ein Haltesteg (45) angeordnet ist und dass zwei zueinander beabstandete Raststücke (49), zwei Federn (52) und zwei Sperrkanten (44) vorgesehen sind.

8. Gerät nach einem der Ansprüche 1 bis 7, **dadurch gekennzeichnet, dass** der Sicherungshebel (26) an dem Gehäuse (6) schwenkbar gelagert ist und dafür mindestens einen Lagerteil (30) umfasst, der in einer Lageraufnahme (12) angeordnet ist, wobei der Lagerteil (30) bevorzugt an dem Sicherungshebel (26) und die Lageraufnahme (12) in einer Stützwand (9, 10) des Gehäuses (6) ausgebildet ist.

9. Gerät nach Anspruch 8, **dadurch gekennzeichnet, dass** der Sicherungshebel (26) an dem Gehäuse (6) über eine Sperreinrichtung nicht lösbar befestigt ist, die einen bevorzugt an der Stützwand (9, 10) ausgebildeten Sperrteil (16) aufweist, der in eine am Sicherungshebel (26) ausgebildete Spenteilaufnahme (32) eingreift.

10. Gerät nach Anspruch 8 oder 9, **dadurch gekennzeichnet, dass** im Lagerteil (30) des Sicherungshebels (26) eine bevorzugt etwa halbkreisförmige Führungsnut (31) ausgebildet ist, die sich von einer am Umfangsrand des Lagerteils (30) vorgesehenen Einführöffnung (33) etwa radial in Richtung zur Schwenkachse des Sicherungshebels (26) hin erstreckt, dass die Lageraufnahme (12) in der Stützwand (9, 10) des Gehäuses (6) eine Eintrittsöffnung (13) aufweist, die bei in eine Öffnungsstellung zurüdcgeschwenktem Sicherungshebel (26) mit der Einführöffnung (33) der Führungsnut (31) des Lagerteils (30) deckungsgleich ist und dass der Sicherungshebel (26) in der Verschlussstellung durch ein an einem Anschlag (35) eines Rastnokkens (15) anliegendes Widerlager (34) gegen ein unbeabsichtigtes Zurückschwenken in die Öffnungsstellung arretiert ist.

11. Gerät nach einem der Ansprüche 1 bis 10, **dadurch gekennzeichnet, dass** das Gehäuse (6) eine Steckeraufnahme (7) für einen Stecker (18) aufweist, der an einem über den Sicherungshebel (26) verriegelbaren Modulteil (17) angeordnet ist.

12. Gerät nach Anspruch 11, **dadurch gekennzeichnet, dass** die Steckeraufnahme (7) des Gehäuses (6) elektrischen Zu- und/oder Ableitungen zugehörige Elektroanschlüsse aufweist und das Modulteil (17) elektrische und/oder elektronische Einbauteile beinhaltet.

13. Gerät nach Anspruch 11 oder 12, **dadurch gekennzeichnet, dass** das Modulteil (17) an mindestens einer Seitenwand (19, 20) mindestens einen in die Führungsnut (31) des Lagerteils (30) eingreifenden Verriegelungszapfen (23) aufweist und dass an mindestens einer Seitenwand (19, 20) des Modulteils (17) mindestens ein Steg (24) angeordnet ist, der in einer sich in Einsteckrichtung des Modulteils (17) erstreckenden Längsnut (14) geführt ist, die an der Stützwand (9, 10) des Gehäuses (6) ausgebildet ist.

14. Gerät nach Anspruch 13, **dadurch gekennzeichnet, dass** nach dem Einführen des Verriegelungszapfens (23) in eine Einführöffnung (33) der Führungsnut (31) und einem geringfügigen Verschwenken des Sicherungshebels (26) in Richtung der Verschlussstellung der Verriegelungszapfen (23) gegen ein Hinausgleiten aus der Führungsnut () in letzterer formschlüssig gesichert ist und zwischen dem Stecker (18) und der Steckeraufnahme (7) ein den Richtlinien des Explosionsschutzes entsprechender Mindestkontaktabstand besteht.

## Claims

1. A device comprising a fastening apparatus (1) for locking releaseably to a support rail (2) and a securing lever (26) securing the locking in a closed position,
**characterised in that** the fastening apparatus (1) is provided and is displaceably mounted on a bottom plate (5) of a housing (6), that the securing lever (26) is disposed on the housing (6) and has at least one locking edge (39) for a blocking edge (44) of the fastening apparatus (1), the locking edge (39) preferably being disposed on a projection (38) of the securing lever (26) extending over the projecting wall section (43) of the side wall (41, 42) of the fastening apparatus (1).

2. The device according to Claim 1, **characterised in that** the fastening apparatus (1) has a bottom plate (40) on which is disposed at least one locking piece (49) corresponding to the support rail (2) and that has a cut-out (50) for receiving a transverse leg (3) of the support rail (2) and a ramp (51) for the support rail (2).

3. The device according to Claim 2, **characterised in that** the fastening apparatus (1) has at least one retaining stay (45) which corresponds to at least one retaining rib (47) of the bottom plate (5), is disposed in a space () between two retaining ribs (47) of the bottom plate (5) and is provided on a side wall (41, 42) of the bottom plate (5).

4. The device according to Claim 2 or 3, **characterised in that** the fastening apparatus (1) has at least one blocking edge (44) for the securing lever (26) which is disposed on the side wall (41, 42) of the bottom plate (40), preferably on a projecting wall section (43).

5. The device according to any of Claims 2 to 4, **characterised in that** at least one spring (52) shifting the locking piece (49) towards the support rail (2) is assigned to the fastening device (1), said spring preferably being in the form of a coiled pressure spring and being mounted on the bottom plate (40) of the fastening device (1), engaging with one end on a wall surface (54) of the bottom plate (5) of the housing (6) and preferably being supported by the other end against a rib (55) of the bottom plate (40).

6. The device according to any of Claims 2 to 5, **characterised in that** the fastening apparatus (1) has at least one locking tongue (56) corresponding to the bottom plate (5) of the housing (6) and which is disposed on the bottom plate (40), the plane of which projects upwardly towards the bottom plate (5) and rests with a face surface (57) against a wall (58) of the bottom plate (5).

7. The device according to any of Claims 2 to 6, **characterised in that** the fastening apparatus (1) with the bottom plate (40) and two spaced apart side walls (41, 42) is approximately U-shaped, that at least one retaining stay (45) is respectively disposed on the insides of the side walls (41, 42) facing one another, and that two locking pieces (49) spaced apart from one another, two springs (52) and two blocking edges (44) are provided.

8. The device according to any of Claims 1 to 7, **characterised in that** the securing lever (26) is pivotably mounted on the housing (6) and for this purpose comprises at least one bearing part (30) which is disposed in a bearing receptacle (12), the bearing part (30) preferably being formed on the securing lever (26) and the bearing receptacle (12) being formed in a supporting wall (9, 10) of the housing (6).

9. The device according to Claim 8, **characterised in that** the securing lever (26) is non-releaseably fastened to the housing (6) by a blocking device which has a blocking part (16) preferably formed on the supporting wall (9, 10) and which engages in a blocking part receptacle (32) formed on the securing lever (26).

10. The device according to Claim 8 or 9, **characterised in that** there is formed in the bearing part (30) of the securing lever (26) a guide groove (31), preferably approximately semi-circular in form, which extends approximately radially from an insertion opening (33) provided on the circumferential edge of the bearing part (30) towards the pivot axis of the securing lever (26), that the bearing receptacle (12) has an inlet opening (13) in the supporting wall (9, 10) of the housing which, when the securing lever (26) is pivoted back into an open position, is congruent with the insertion opening (33) of the guide groove (31) of the bearing part (30) and that the securing lever (26) is locked in the closed position so that it does not unintentionally pivot back into the open position by a counter-bearing (34) resting against a stop (35) of a locking cam (15).

11. The device according to any of Claims 1 to 10, **characterised in that** the housing (6) has a plug receptacle (7) for a plug (18) which is disposed on a module part (17) that can be locked by the securing lever (26).

12. The device according to Claim 14, **characterised in that** the plug receptacle (7) of the housing (6) has electrical connections corresponding to electrical supply and/or discharge lines and the module part (17) contains electrical and/or electronic built-in parts.

13. The device according to Claim 11 or 12, **characterised in that** the module part (17) has on at least one side wall (19, 20) at least one locking pin (23) engaging in the guide groove (31) of the bearing part (30) and that there is disposed on at least one side wall (19, 20) of the module part (17) at least one stay (24) that is guided in a longitudinal groove (14) extending in the direction of inserting the module part (17) and which is formed on the supporting wall (9, 10) of the housing (6).

14. The device according to Claim 13, **characterised in that** after inserting the locking pin (23) into an insertion opening (33) of the guide groove and slightly pivoting the securing lever (26) towards the closed position, the locking pin (23) is secured with form fit in the guide groove () such as to prevent it from sliding out of the latter, and a minimum contact spacing in accordance with the explosion protection regulations exists between the plug (18) and the plug receptacle (7).

## Revendications

1. Appareil comportant un dispositif de fixation (1) pour permettre son encliquetage amovible sur un rail support (2) et un levier de sécurité (26) garantissant l'encliquetage dans une position de fermeture,
**caractérisé en ce que**
le dispositif de fixation (1) est prévu sur une plaque de fond (5) d'un boitier (6) et est monté mobile en translation et **en ce que** le levier de sécurité (26) est monté sur le boitier (6) et comporte au moins une arête de verrouillage (39) pour une arête de blocage (44) du dispositif de fixation (1), l'arête de verrouillage (39) étant de préférence située sur une saillie (38) du levier de sécurité (26) venant en prise au-dessus d'une partie de paroi en saillie (43) de la paroi latérale (41, 42) du dispositif de fixation (1).

2. Appareil selon la revendication 1,
**caractérisé en ce que**
le dispositif de fixation (1) comporte une plaque de base (40) sur laquelle est montée au moins une pièce d'encliquetage (49) correspondant au rail support (2) qui comporte un évidement de réception (50) d'une branche transversale (3) du rail support (2) et un biseau de glissement (51) pour le rail support (2).

3. Appareil selon la revendication 2,
**caractérisé en ce que**
le dispositif de fixation (1) comporte au moins une barrette de retenue (45) correspondant à au moins une nervure de retenue (47) de la plaque de fond, située à distance entre deux nervure de retenue (47) de la plaque de fond (5) et est prévue sur une paroi latérale (41, 42) de la plaque de base (40).

4. Appareil selon la revendication 2 ou 3,
**caractérisé en ce que**
le dispositif de fixation (1) comporte au moins une arête de blocage (44) du levier de sécurité (26) qui est située sur la paroi latérale (41, 42) de la plaque de base (40) de préférence sur une partie en saillie (43) de cette paroi.

5. Appareil conforme à l'une des revendications 2 à 4,
**caractérisé en ce qu'**
au dispositif de fixation (1) est associé au moins un ressort (52) déplaçant la pièce d'encliquetage (49) contre le rail support (2) qui est de préférence réalisé sous la forme d'un ressort de pression hélicoïdal, et est logé sur la plaque de base (40) du dispositif de fixation (1), ce ressort venant en prise par une extrémité sur une surface de paroi (54) de la plaque de fond (5) du boitier (6) et s'appuyant de préférence par son autre extrémité contre une nervure (55) de la plaque de base (40).

6. Appareil conforme à l'une des revendications 2 à 5,
**caractérisé en ce que**
le dispositif de fixation (1) comporte au moins une languette d'encliquetage (56) correspondant à la plaque de fond (5) du boîtier (6) qui est positionnée sur la plaque de base (40) dont le plan est en saillie en direction de la plaque de fond (5) et qui s'appuie par une face frontale (57) contre une paroi (58) de la plaque de fond (5).

7. Appareil conforme à l'une des revendications 2 à 6,
**caractérisé en ce que**
le dispositif de fixation (1) est, avec la plaque de base (40) et deux parois latérales (41, 42) situées à distance l'une de l'autre essentiellement en forme de U,
**en ce que**
sur les faces internes tournées l'une vers l'autre des parois latérales (41, 42) est respectivement disposée au moins une barrette de retenue (45), et **en ce qu'**il est prévu deux pièces d'encliquetage (49) situées à distance l'une de l'autre, deux ressorts (52) et deux arêtes de blocage (44).

8. Appareil conforme à l'une des revendications 1 à 7,
**caractérisé en ce que**
le levier de sécurité (26) est monté pivotant sur le boitier (6) et comporte à cet effet au moins une partie de palier (30) qui est positionnée dans un logement de réception de palier (12), la partie de palier (30) étant de préférence réalisée sur le levier de sécurité (26) tandis que le logement de réception de palier (12) est réalisé dans une paroi d'appui (9, 10) du boitier (6).

9. Appareil conforme à la revendication 8,
**caractérisé en ce que**
le levier de sécurité (26) est fixé sur le boitier (6) de façon non amovible par l'intermédiaire d'un dispositif de blocage qui comporte une partie de blocage (16) de préférence réalisée sur la paroi d'appui (9, 10) qui vient en prise dans un logement de réception (32) de la partie de blocage réalisé sur le levier de sécurité (26).

10. Appareil conforme à la revendication 8 ou 9,
**caractérisé en ce que**
dans la partie de palier (30) du levier de sécurité (26) est réalisée une rainure de guidage (31) de préférence essentiellement semi-circulaire qui s'étend à partir d'une ouverture d'insertion (33) située sur le bord périphérique de la partie de palier (30) essentiellement radialement en direction de l'axe de pivotement du levier de sécurité (26), **en ce que** le logement de réception de palier (12) comporte dans la paroi d'appui (9, 10) du boitier (6) une ouverture d'entrée (13) qui, lorsque le levier de sécurité (26) revient par pivotement en position d'ouverture, est en concordance avec l'ouverture d'insertion (33) de la rainure de guidage (31) de la partie de palier (30), et **en ce que** dans la position de fermeture le levier de sécurité (26) est bloqué par une culée (34) s'appliquant contre une butée (35) d'une came d'encliquetage (15) pour empêcher un retour par pivotement involontaire dans la position d'ouverture.

11. Appareil conforme à l'une des revendications 1 à 10,
**caractérisé en ce que**
le boitier (6) comporte un logement de réception (7) d'une fiche mâle (18) qui est montée sur une partie modulaire (17) pouvant être verrouillée par le levier de sécurité (26).

12. Appareil conforme à la revendication 14,
**caractérisé en ce que**
le logement de réception (7) d'une fiche du boitier (6) comporte des bornes électriques intégrées à des conduites électriques d'entrée ou de sortie et la partie modulaire (17) comporte des composants électriques et/ou électroniques.

13. Appareil conforme à l'une des revendications 11 et 12,
**caractérisé en ce que**
la partie modulaire (17) comporte sur au moins une paroi latérale (19, 20) au moins un tourillon de verrouillage (23) venant en prise dans la rainure de guidage (31) de la partie de palier (30), et
**en ce que**
sur au moins une paroi latérale (19, 20) de la partie modulaire (17) est positionnée au moins une traverse (24) qui est guidée dans une rainure longitudinale (14) s'étendant dans la direction d'enfichage de la partie modulaire (17) qui est réalisée sur la paroi d'appui (9, 10) du boitier (6).

14. Appareil conforme à la revendication 13,
**caractérisé en ce qu'**
après insertion du tourillon de verrouillage (23) dans une ouverture d'insertion (33) de la rainure de guidage (31) et faible pivotement du levier de sécurité (26) en direction de la position de fermeture, le tourillon de verrouillage (23) est protégé par une liaison par la forme pour empêcher son glissement en dehors de la rainure de guidage, et, entre la fiche (8) et le logement de réception (7) de la fiche il y a une distance de contact minimum correspondant aux directives de la protection anti-explosions.
